# EUROPÄISCHE PATENTSCHRIFT

(11) **EP 0 877 552 B1**
(45) Veröffentlichungstag und Bekanntmachung des Hinweises auf die Patenterteilung: **27.10.1999**
(21) Anmeldenummer: 96944063.5
(22) Anmeldetag: 23.12.1996
(51) Int. Cl.: A01N 25/24

(54) **VERFAHREN ZUR WIRKSTOFFAPPLIKATION AN PFLANZEN UND DAFÜR GEEIGNETE ZUBEREITUNG**
METHOD OF APPLYING AN ACTIVE SUBSTANCE TO PLANTS AND A SUITABLE PREPARATION
PROCEDE PERMETTANT D'APPLIQUER UN PRINCIPE ACTIF SUR DES PLANTES, ET COMPOSITION APPROPRIEE

(30) Priorität: 17.01.1996 DE 19601430
(43) Veröffentlichungstag der Anmeldung: 18.11.1998
(73) Patentinhaber: LTS LOHMANN Therapie-Systeme GmbH, 56567 Neuwied (DE)
(72) Erfinder: KLOCZKO, Malgorzata, D-53545 Linz (DE); ROREGER, Michael, D-56567 Neuwied (DE)
(74) Vertreter: Flaccus, Rolf-Dieter, Dr.
(86) Internationale Anmeldenummer: EP9605823
(87) Internationale Veröffentlichungsnummer: WO9725863

(56) Entgegenhaltungen:
- EP-A- 0 290 155
- EP-A- 0 406 779
- WO-A-87/00339
- DE-C- 4 416 927
- GB-A- 2 212 063
- US-A- 5 395 851

## Beschreibung

Die Erfindung bezieht sich auf ein Verfahren zur Applikation eines schichtförmigen Wirkstoffdepots mit verzögerter Wirkstoffabgabe an Pflanzen bzw. Pflanzenteile mit zumindest einer wirkstoffhaltigen haftklebenden Matrixschicht (1) in Flächenkontakt mit der Pflanzenoberfläche und einer im wesentlichen wirkstofffreien und wirkstoffundurchlässigen Rückschicht (B) auf der der Pflanze abgewandten Seite; sie umfaßt eine dafür geeignete Zwei- oder Mehrkomponenten-Zubereitung.

Zur Wundbehandlung von Schnittflächen an Pflanzen, insbesondere Bäumen, die durch Kappen, Auslichten oder im Okulierbereich entstehen, sind seit langem Füllmittel enthaltende Abdeckmassen im Gebrauch, die zunächst im wesentlichen durch Naturstoffe, wie Teer oder Baumwachs, gebildet wurden, oder - der Bautechnik entlehnt - Mörtel- oder Anstrichmassen zur Basis hatten.

Mit zunehmender Entwicklung von Kunstharzen, Schichtstoffen und Polymeren sowie Wirkstoffen und Pestiziden, insbesondere Fungiziden, wurden differenziertere Methoden zur Behandlung von Pflanzen entwickelt.

So wird bereits in der DE-PS 1 281 206 als Mittel zur Behandlung von gewebeverletzten Pflanzen eine wässrige Kunstharzdispersion mit Zellulose als Füllmittel beschrieben, die mit dem Pinsel aufgetragen werden soll und sich gut mit der Pflanze verbindet.

Aus der DE-OS 2 023 262 ist ein pestizidhaltiges Schädlingsbekämpfungsmittel für die Forstwirtschaft bekannt, das in dünnflüssiger Form aufgetragen wird und an Luft zähflüssig aushärtet.

Gemäß der US-PS 4 456 587 wird ein auf die Blätter der zu behandelnden Pflanzen aufzusprühendes Mittel auf der Basis von Polyvinylalkohol/Polyvinylpyrrolidon in wässriger Dispersion vorgesehen, in der mit Öl gemischte Wirkstoff (Pheromon oder Insektizid) feinverteilt wird. Das Polymergemisch trocknet bzw. "härtet" an der Pflanze aus und gibt den Wirkstoff über eine Zeitdauer von einigen Wochen an die Pflanze ab.

In der DE-OS 35 07 008 wird die positive Wirkung von fein gemahlenem Gesteinsmehl (< 4 µ) in einem aufstreich-baren Pflanzenbehandlungsmittel auf der Basis von Kunst-stoffen, Kunstharzen oder Naturharzen hervorgehoben.

Die DD 272 219 beschreibt die Wundbehandlung von Bäumen durch Bepinseln mit zwei Anstrichschichten, indem die Baumrinde zunächst mit einem Latex-Binder bestrichen und nach seinem Abbinden mit einer wirkstoffhaltigen Masse aus Alkydharz und Schichtsilikat behandelt wird.

Aus der DD 273 573 A1 ist ein pastenförmiges Mittel zur Bekämpfung rindenbrütender Schädlinge, wie Borkenkäfer, zu entnehmen, das auf die Rinde aufgestrichen wird und neben dem oder den Wirkstoff(en) Terpen-Kohlenwasserstoffe wie α-Pinen oder Myrcen enthält und für die kontrol-lierte, verzögerte Wirkstoffabgabe geeignet ist. Als Mittel zur Vermeidung von Umweltkontamination wird das Abdecken mit Plastikfolie empfohlen.

Noch in jüngster Zeit wird gemäß der DE-Patentanmeldung P 44 30 449.8 eine sprühfähige Wirkstoffzubereitung vorgeschlagen, die einen wasserunlöslichen, haftklebenden Film mit kontrollierter, verzögerter Wirkstoffabgabe ergibt. Die US-PS 5 395 851 beschreibt schließlich eine sprüh- oder streichfähige Masse mit einem Fungizid in einer Mischung von Natur- und Kunstharz und Metallsalzen von Fettsäuren.

Alle diese vielfältigen Bemühungen erscheinen nicht voll befriedigend: Die in praktikabler Technik erzeugten Abdeckungen mit mehr oder minder guter Haftfähigkeit haben den Nachteil, daß Wirkstoffverluste in die Umgebung - insbesondere durch Witterungseinflüsse - auftreten können und eine erhöhte Gefährdung freilebender Tiere gegeben ist. Der Schichtauftrag in Sprühtechnik ist für den Anwender nicht unproblematisch, und Schichten mit guter Haft- und Klebefähigkeit können zum Verkleben benachbarter Pflanzenteile führen.

Eine zusätzliche Abdeckung durch Plastikfolie ist zum einen aufwendig und unbequem und zum anderen aus räumlichen Gegebenheiten nicht immer möglich.

Der vorliegenden Erfindung liegt daher die Aufgabe zugrunde, Systeme für die Wirkstoffverabreichung an Pflanzen vorzusehen, die Wirkstoffe mit dem Ziel einer anhaltenden therapeutischen Wirkung über einen längeren Zeitraum ohne merkliche Verluste nach außen freigeben. Diese Systeme sollen einfach und ohne Gefährdung des Anwenders handhabbar und ohne räumliche Beschränkung (d.h. z.B. auch auf Bodendeckerpflanzen) applizierbar sein.

Die Lösung dieser Aufgabe gelingt in überraschend einfacher Weise durch das Verfahren gemäß den kennzeichnenden Merkmalen des Hauptanspruchs und mit einer entsprechenden Wirkstoffdepotzubereitung, welche die vorgenannten Forderungen in vollem Umfang erfüllt. Weitere erfindungswesentliche Ausgestaltungen der Wirkstoffzubereitung sind entsprechend den Unteransprüchen vorgesehen.

Als "selbstklebend" oder "haftklebend" wird hier "permanent oberflächenklebrig, sowohl vor als auch nach der Anwendung" verstanden.

Zwar sind aus der DR-PS 39 22 366 bereits gebrauchsfertige Wirkstoffdepotsysteme in Form sog. "Pflaster" bekannt, die am Applikationsort eine analoge Schichtung und Funktionalität aufweisen, jedoch sind solche Systeme aufwendig und ihr Einsatz ist aus räumlichen Gründen beschränkt.

Gemäß der Erfindung ergibt sich nach der Applikation ein Schichtaufbau aus einer im wesentlichen wirkstoff- und wasserundurchlässigen Außenschicht sowie einer oder mehreren der Pflanze zugewandten wirkstoffhaltigen, haftklebenden Matrixschichten. Durch die einfache Art der Applikation ergibt sich die Möglichkeit, Pflanzen verschiedener Morphologien uneingeschränkt zu behandeln. Wesentlich für die Erfindung ist die Anwesenheit einer inerten nichtklebenden Rückschicht, die die wirkstoffhaltige Matrix vor Witterungseinflüssen schützt, indem sie diese vollständig überdeckt. Auf diese Art und Weise wird die Gefahr einer Umweltkontamination sowie die Gefahr des ungewollten Anklebens anderer Pflanzenteile vermieden.

Die im folgenden vorgestellten Systeme werden im Anstrichverfahren unter Verwendung von Pinseln und Applikationsschwämmchen appliziert. Die einzelnen Schichten werden dabei separat, d.h. zeitlich getrennt, aufeinander aufgetragen. Die dafür zu verwendenden Massen können aus Behältnissen oder Abgabevorrichtungen mit einem Zwei- oder Mehrkammersystem dosiert werden. Die einzelnen Komponenten sind dabei so angeordnet, daß die wirkstoffhaltige Komponente mit einer haftklebenden Zusammensetzung zuerst auf die Pflanzenoberfläche in Form eines ein- oder mehrschichtigen Belages aufgestrichen wird. Erst nach leichtem Antrocknen wird sie mit der zweiten, wirkstofffreien Schicht vollflächig abgedeckt.

Die Deckschicht kann dabei auch mittels Sprühens (oder Schäumens) hergestellt werden.
Die zu versprühende Zubereitung wird hierzu in eine treibgasfreie Pump-Dose mit einem Fingerzerstäuber abgefüllt. In solchen Fällen weist die wirkstofffreie Zubereitung selbstverständlich eine relativ niedrige Viskosität auf , so daß einwandfreies Versprühen gewährleistet ist.

Wesentliche Bestandteile erfindungsgemäßer Zubereitungen sind Polymere, die sowohl die Funktion eines Wirkstoffträgers (Matrix) als auch die der Rohstoffe für die Rückschicht besitzen.
Für die haftklebende Matrixschicht des erfindungsgemäßen Pflasters werden Homo- oder Copolymere aus Estern der Acrylsäure, z.B. Acrylsäureethylester, Acrylsäure-n-butylester, sowie Methacrylmethylester verwendet. Darüber hinaus sind als geeignete Polymere Ethylenvinylacetat oder Dreiblockpolymere, z.B. Styrol-Butadien-Styrol, zu nennen. Sie werden auf Basis einer Lösung in organischen Lösemitteln bzw. einer Wasserdispersion verarbeitet, wobei wässrige Systeme aufgrund ihrer günstigen ökologischen Eigenschaften zu bevorzugen sind.

Bei nicht haftklebenden Polymeren müssen zur Erzielung gewünschter Eigenschaften geeignete Hilfsstoffe zugesetzt werden. Dazu dienen vor allem harzartige Stoffe wie modifizierte Naturharze, vor allem Kolophonium und dessen Derivate, Polyterpenharze sowie Kohlenwasserstoffharze. Als besonders geeignet seien hier Kolophoniumester (wie Foral® 85 und Staybelite Ester® 10) hervorgehoben. Die Menge des Harzzusatzes hängt von den gewünschten Eigenschaften ab und ist nach oben hin begrenzt, da die Kohäsion der gebildeten Beläge bei zu großem Harzanteil zu gering wird. Sie kann zwischen 1,0 und 20,0 Gew.-% variieren und liegt üblicherweise im Bereich von 5 bis 10 Gew.-%, bezogen auf den Feststoffgehalt der Zubereitung.

Die relativen Anteile an Wirkstoff und Polymer in der Matrix können über einen weiten Bereich, je nach gewünschtem Effekt, variieren. Die Verhältnisse können im Bereich von 1% Wirkstoff und 99% Polymer bis zu 99% Wirkstoff und 1% Polymer liegen. Verhältnisse mit guten Ergebnissen schließen 1 Teil Wirkstoff auf 10-30 Teile Polymer ein.

Die Wirkstoffmatrix kann im Bedarfsfall Penetrationsverstärker und deren Gemische, üblicherweise in Konzentrationen von 1 bis 10 Gew.-% enthalten. Als Penetrationsverstärker können beispielsweise eingesetzt werden: langkettige Alkohole, 2-Pyrrolidonderivate, Mono-, Di-, oder Triglyceride, Fettsäuren, Fettsäureester und viele andere mehr.

Die in erfindungsgemäßen Pflastern enthaltenen Wirkstoffe können in der Polymermatrix gelöst oder dispergiert sein. Sie können einzeln oder in einer Mischung vorliegen.

Eine besonders vorteilhafte Ausgestaltung der erfindungsgemäßen Systeme sind die, bei denen Wirkstoffe kontrolliert (durch Diffusion) freigesetzt werden. Dies setzt allerdings voraus, daß die wirkstoffhaltige Komponente mit einem Applikator aufgetragen wird, der es ermöglicht, sowohl die Gesamtfläche als auch die Stärke der aufzutragenden Schicht zu regulieren. Dabei kann sich die zu erreichende Gesamtwirkstoffabgabefläche aus mehreren Teilflächen ("units") zusammensetzen, die vorzugsweise punktuell aufgetragen werden. Der Applikator kann verschiedener Ausgestaltung sein, wie z.B. in Form einer flexiblen Schablone. Eine weitere Möglichkeit stellen Spendersysteme, wie z.B. Injektions-spender oder Siebdruckplatte dar, die zusätzlich in das Abgabebehältnis integriert sein können.

Unter den Wirkstoffen, die mittels der erfindungsgemäßen Zubereitungen an Pflanzen abgegeben werden können, sind in erster Linie systemisch wirkende Pflanzenschutzmittel (Fungizide, Insektizide, Akarizide, Bakterizide) sowie Wachstumsregulatoren zu nennen.

Systemisch wirkende Fungizide sind beispielsweise Benomyl, Bromuconazol, Bitertanol, Etaconazol, Flusilazol, Furalaxyl, Fosetyl-A1, Imazalil, Metalaxyl, Propinazol, Thiabendazol, Triadimefon und Triticonazol.

Systemisch wirkende Insektizide sind beispielweise Buthocarboxim, Dimethoat, Imidacloprid, Fenoxycarb, Methamyl, Oxamyl, Pirimicarb und Propoxur.

Systemisch wirkende Akarizide sind beispielsweise Clofentizin, Fenbutation-Oxyd und Hexythiazox.

Systemisch wirkende Wachstumsregulatoren sind beispielsweise Etephon und β-Indolylessigsäure (IES).

Unter den systemisch wirkenden Bakteriziden ist beispielsweise Flumequine zu nennen.

Entsprechend der Schutzfunktion der Abdeckschicht sollen die Ausgangsstoffe, die zu ihrer Herstellung an der Pflanze dienen, eine relativ hohe Diffusionsfestigkeit und hydrophobe Eigenschaften besitzen. Hierzu eigenen sich Polyvinylacetat, Cellulosederviate, Chitosan und andere. Als besonders vorteilhaft sind Cellulosederivate wie Celluloseacetat bzw. Cellulosebutyrat zu nennen, da sie bioabbaubar sind.

Alle genannten Polymere werden als fließfähige bzw. pastöse Medien auf die zuvor aufgetragene Wirkstoffschicht appliziert. Dazu werden sie in der Regel mit entsprechenden Lösemitteln vermischt. Als geeignete Lösemittel können hierzu Ethylacetat, Aceton, Ethanol, Isopropanol oder deren Gemische verwendet werden. Die Menge des Lösemittels oder des Lösemittelgemisches muß so gewählt werden, daß die gesamte Zubereitung eine solche Viskosität aufweist, die ihren Auftrag im Streichverfahren möglich macht. Gute Ergebnisse bei dieser Anwendungstechnik sind mit Massen zu erzielen, deren Viskosität zwischen 1,5 und 3,0 Pa.s liegt. Der Polymergehalt solcher Massen beträgt zweckmäßig ca. 25-80 Gew.-%, bevorzugt 50 bis 65 Gew.-%.

Die erfindungsgemäßen Wirkstoffabgabesysteme können dazu verwendet werden, bioaktive Substanzen an Pflanzen kontrolliert zu verabreichen. Ein bevorzugtes Anwendungsgebiet für diese Systeme ist der Pflanzenschutzbereich. Die folgenden Beispiele dienen zur näheren Erläuterung der Erfindung. Alle Mengenangaben, Anteile und Prozentanteile beziehen sich, soweit nicht anders angegeben, auf das Gesamtgewicht der jeweiligen Komponentenzubereitung.

### Beispiel 1

In 65 Gewichtsteilen einer wässrigen Haftdispersion (Collano® AGX-23; Festkörperanteil 61 %) auf Polyacrylatbasis wurden 29 Gewichtsteile des Fungizides Triticonazol zusammen mit 2 Gewichtsteilen des Insektizides Imidacloprid (beide Wirkstoffe suspendiert in 5 Gewichtsteilen 1-Methyl-2-pyrrolidon) unter ständigem Rühren dispergiert. Die so erhaltene wirkstoffhaltige Dispersion, deren relative Viskosität bei 24°C 1,52 Pa.s (nach Brookfield LVF/Meßkörper) betrug, wurde mit Hilfe eines Pinsels auf die Haupttriebe eines befallenen Posenstockes (0,25 g Masse pro Trieb) aufgetragen und zu einem Streifen von ca. 1 cm Breite und 5 cm Länge ausgestrichen. Diese wirkstoffhaltige haftklebende Schicht wurde anschließend mit einer ca. 0,1 mm dicken Schicht einer Polyvinylacetat-Lösung bedeckt (33%-ige Lösung von Polyvinylacetat in Ethylacetat), die ebenfalls im Anstrichverfahren auftragen wurde.

### Beispiel 2

In 25 Gewichtsteilen eines Lösemittelgemisches von Ethylacetat und Ethanol (Ethylacetat: Ethanol = 1:4) wurden 6 Gewichtsteile Ethylcellulose (Ethylcellulose NF®50) unter Rühren gelöst. Nach Zugabe von 15,0 Gewichtsteilen eines Harzes (Hercolyn®D) als Klebrigmacher wurden der so erhaltenen haftklebenden Masse 3,5 Gewichtsteile des Wirkstoffes Imidacloprid und 42,5 Gewichtsteile des Wirkstoffes Triticonazol zugesetzt, wobei die Wirkstoffe in 8 Gewichtsteilen 1-Methyl-2-pyrrolidon suspendiert waren. Die zugegebenen Wirkstoffe wurden unter ständigem Rühren gleichmäßig in der Masse verteilt. Die so erhaltene hochviskose (pastöse), wirkstoffhaltige haftklebende Masse wurde unter Einsatz eines Pinsels auf die Haupttriebe eines Rosenstockes (im Basisbereich) aufgestrichen (0,35 g Masse pro Trieb). Auf der wirkstoffhaltigen Schicht wurde ein Film aus Celluloseacetatbutyrat erzeugt, indem 0,1 g einer 25%-iger Lösung von Celluloseacetatbutyrat in Aceton aufgestrichen wurden.

## Patentansprüche

1. Verfahren zur Applikation eines schichtförmigen Wirkstoffdepots mit verzögerter Wirkstoffabgabe an Pflanzen bzw. Pflanzenteile mit zumindest einer wirkstoffhaltigen haftklebenden Matrixschicht (A) in Flächenkontakt mit der Pflanzenoberfläche und einer im wesentlichen wirkstofffreien und wirkstoffundurchlässigen Rückschicht (B) auf der der Pflanze abgewandten Seite, dadurch gekennzeichnet, daß man die Schicht (A) am Applikationsort an der Pflanze aus einer streichfähigen, wirkstoffhaltigen, haftklebenden Zusammensetzung auf Polymerbasis in Anstrichtechnik in gewünschtem Flächenmuster erzeugt, auf der dann die Schicht (B) in Anstrich- oder Sprühtechnik erzeugt wird.

2. Zwei- oder Mehrkomponenten-Zubereitung zur Durchführung des Verfahrens nach Anspruch 1, dadurch gekennzeichnet, daß sie zumindest einen Vorrat (a) einer streichfähigen Zusammen-setzung zur Erzeugung der wirkstoffhaltigen Schicht(en) (A) sowie einen weiteren Vorrat (b) in streich- oder sprüh-fähiger Form zur Erzeugung der Rückschicht (B) enthält.

3. Zubereitung nach Anspruch 2, dadurch gekennzeichnet, daß der Vorrat (a) durch eine streichfähige Lösung in einem organischen Lösemittel oder eine solche wässrige Dispersion eines Homo- oder Copolymeren oder von Polymergemischen mit Hilfs- und Zusatzstoffen und darin dispergierten Wirkstoffen gebildet wird.

4. Zubereitung nach Anspruch 2 oder 3, dadurch gekennzeichnet, daß der Vorrat (a) die Klebeigenschaften fördernde harzartige Stoffe in Mengen von 1 bis 20 Gew.% bezogen auf den Feststoffgehalt von (a), aufweist.

5. Zubereitung nach Anspruch 2, 3 oder 4, dadurch gekennzeichnet, daß der Vorrat (a) etwa 1 Teil von einem oder mehreren Wirkstoffen pro 10 bis 30 Teile Polymer aufweist.

6. Zubereitung nach einem der Ansprüche 2 bis 5, dadurch gekennzeichnet, daß der Vorrat (a) Penetrationsverstärker aufweist.

7. Zubereitung nach einem der Ansprüche 2 bis 6, dadurch gekennzeichnet, daß der Vorrat (a) für die Erzeugung einer Matrixschicht (A) mit kontrollierter Wirkstofffreigabe geeignet ist.

8. Zubereitung nach einem der Ansprüche 2 bis 7, dadurch gekennzeichnet, daß der Vorrat (a) als systemische Wirkstoffe Pflanzenschutzmittel, Pflanzenstärkungsmittel, Wachstumsregulatoren, Nährstoffe und/oder Mittel zur Steueung biologischer Prozesse enthält.

9. Zubereitung nach einem der Ansprüche 2 bis 8, dadurch gekennzeichnet, daß der Vorrat (b) zur Bildung einer wirkstoffinerten, lipophilen Deckschicht mit hoher Diffusionsfestigkeit geeignet ist.

10. Zubereitung nach einem der Ansprüche 2 bis 9, dadurch gekennzeichnet, daß der Vorrat (b) durch eine Lösung von Celluloseacetat oder -butyrat mit einem Polymergehalt von 25-80 Gew.% mit einer Viskosität von 1,5-3 Pa . s gebildet wird.

## Claims

1. Method of applying a layer-form active ingredient depot with delayed release of active ingredients to plants or plant parts, having at least one pressure-sensitively adhering matrix layer (A) which comprises active ingredient and is in two-dimensional contact with the plant surface, and one back layer (B) which is essentially free from and impermeable to active ingredient and is on the side remote from the plant, characterized in that the layer (A) is produced by painting in the desired two-dimensional pattern at the site of application on the plant from a spreadable, pressure-sensitively adhering, polymer-based composition which comprises active ingredient and then on the said layer (A) the layer (B) is produced by painting or spraying.

2. Two-component or multicomponent preparation for implementing the method according to Claim 1, characterized in that it comprises at least one reservoir (a) of a spreadable composition for producing the layer(s) (A), which comprise active ingredient, and a further reservoir (b) in spreadable or sprayable form for producing the back layer (B).

3. Preparation according to Claim 2, characterized in that the reservoir (a) is formed by a spreadable solution in an organic solvent or a spreadable aqueous dispersion of a homo- or copolymer or of polymer mixtures with auxiliaries and additives and with active ingredients dispersed therein.

4. Preparation according to Claim 2 or 3, characterized in that the reservoir (a) contains, in amounts of from 1 to 20% by weight based on the solids content of (a), resinous substances which promote the adhesive properties.

5. Preparation according to Claim 2, 3 or 4, characterized in that the reservoir (a) contains about 1 part of one or more active ingredients to from 10 to 30 parts of polymer.

6. Preparation according to one of Claims 2 to 5, characterized in that the reservoir (a) comprises penetration accelerants.

7. Preparation according to one of Claims 2 to 6, characterized in that the reservoir (a) is suitable for producing a matrix layer (A) with controlled release of active ingredient.

8. Preparation according to one of Claims 2 to 7, characterized in that the reservoir (a) comprises, as systemic active ingredients, plant protection agents, plant strengthening agents, growth regulators, nutrients and/or agents for regulating biological processes.

9. Preparation according to one of Claims 2 to 8, characterized in that the reservoir (b) is suitable for forming a lipophilic top layer which is inert to active ingredients and has high diffusion resistance.

10. Preparation according to one of Claims 2 to 9, characterized in that the reservoir (b) is formed by a solution of cellulose acetate or cellulose butyrate having a polymer content of 25-80% by weight and a viscosity of 1.5-3 Pa.s.

## Revendications

1. Procédé pour l'application d'un dépôt d'un principe actif en forme de couches, avec une libération retardée du principe actif, sur des plantes ou des parties de plantes, présentant au moins une couche de matrice (A) adhésive contenant le principe actif, en contact superficiel avec la surface des plantes, et un revers (B) essentiellement exempt de principe actif et imperméable au principe actif sur le côté éloigné de la plante, caractérisé en ce qu'on crée la couche (A) sur l'endroit d'application sur la plante à partir d'une composition adhésive pouvant être étalée, contenant le principe actif, à base de polymère par la technique d'enduction selon le modèle de surface souhaité, sur laquelle on crée alors la couche (B) par la technique d'enduction ou de pulvérisation.

2. Composition à deux ou plusieurs composants pour la réalisation du procédé selon la revendication 1, caractérisée en ce qu'elle contient au moins une réserve (a) d'une composition pouvant être étalée pour créer la couche ou les couches (A) contenant le principe actif, ainsi qu'une autre réserve (b) sous une forme pouvant être étalée ou pulvérisée pour créer le revers (B).

3. Composition selon la revendication 2, caractérisée en ce que la réserve (a) est formée par une solution pouvant être étalée dans un solvant organique ou par une dispersion aqueuse d'un homopolymère ou d'un copolymère ou de mélanges de polymères, avec des additifs et des adjuvants, et par le principe actif dispersé dans ladite solution ou ladite dispersion.

4. Composition selon la revendication 2 ou 3, caractérisée en ce que la réserve (a) comprend les substances conférant les propriétés adhésives en des quantités de 1 à 20 % en poids, par rapport à la teneur en substance solide de (a).

5. Composition selon la revendication 2, 3 ou 4, caractérisée en ce que la réserve (a) présente environ 1 partie d'un principe actif ou de plusieurs principes actifs pour 10 à 30 parties de polymère.

6. Composition selon l'une quelconque des revendications 2 à 5, caractérisée en ce que la réserve (a) comporte des agents de renforcement de pénétration.

7. Composition selon l'une quelconque des revendications 2 à 6 caractérisée en ce que la réserve (a) convient pour la création d'une couche de matrice (A) présentant une libération contrôlée du principe actif.

8. Composition selon l'une quelconque des revendications 2 à 7, caractérisée en ce que la réserve (a) contient comme principes actifs systémiques des agents de protection de plantes, des agents de renforcement de plantes, des régulateurs de croissance, des substances nutritives et/ou des agents de contrôle de processus biologiques.

9. Composition selon l'une quelconque des revendications 2 à 8, caractérisée en ce que la réserve (b) convient pour la formation d'une couche de recouvrement lipophile, inerte au principe actif, présentant une résistance élevée à la diffusion.

10. Composition selon l'une quelconque des revendications 2 à 9, caractérisée en ce que la réserve (b) est constituée par une solution d'acétate ou de buryrate de cellulose présentant une teneur en polymère comprise entre 25 et 80% en poids et une viscosité de 1,5 à 3 Pa.s.
